Europäisches Patentamt

European Patent Office

Office européen des brevets

(19)

(11) Publication number: **0 087 282**
**B1**

(12) **EUROPEAN PATENT SPECIFICATION**

(45) Date of publication of patent specification: **28.05.86**

(51) Int. Cl.⁴: **F 16 M 11/08, H 04 N 5/64**

(21) Application number: **83300834.5**

(22) Date of filing: **18.02.83**

(54) **Turntable assemblies.**

(30) Priority: **24.02.82 GB 8205442**

(43) Date of publication of application:
**31.08.83 Bulletin 83/35**

(45) Publication of the grant of the patent:
**28.05.86 Bulletin 86/22**

(84) Designated Contracting States:
**AT BE CH DE FR IT LI LU NL SE**

(56) References cited:
**FR-A- 908 015**
**FR-A-1 265 633**
**FR-A-1 362 637**
**US-A-1 878 320**
**US-A-2 905 421**

(73) Proprietor: **PLESSEY OVERSEAS LIMITED**
**Vicarage Lane**
**Ilford Essex IGI 4AQ (GB)**

(72) Inventor: **Prince, Dennis**
**40 Elvaston Drive**
**Long Eaton Nottingham (GB)**

(74) Representative: **Field, Howard John**
**The Plessey Company plc Beeston**
**Nottingham, NG9 1LA (GB)**

Courier Press, Leamington Spa, England.

## Description

This invention relates to turntable assemblies and more particularly but not exclusively to a turntable assembly for a visual display unit (VDU) so that the VDU can be swivelled on a fixed base. A turntable assembly in accordance with the prior art portion of Claim 1 is known from FR—A—1.362.637.

It is an object of the invention therefore to provide a turntable assembly which will support a reasonable weight and have relatively low friction when it is rotated.

The invention as claimed in Claim 1 is intended to achieve this object. Particular embodiments of the invention are set out in the dependent claims.

Preferably the low friction washer member comprises a waveform washer.

An embodiment of the invention will now be described by way of example only from which further features of the invention will become apparent, with reference to the accompanying drawings in which:—

Figure 1 is a cross-sectional view of a turntable constructed in accordance with the invention and

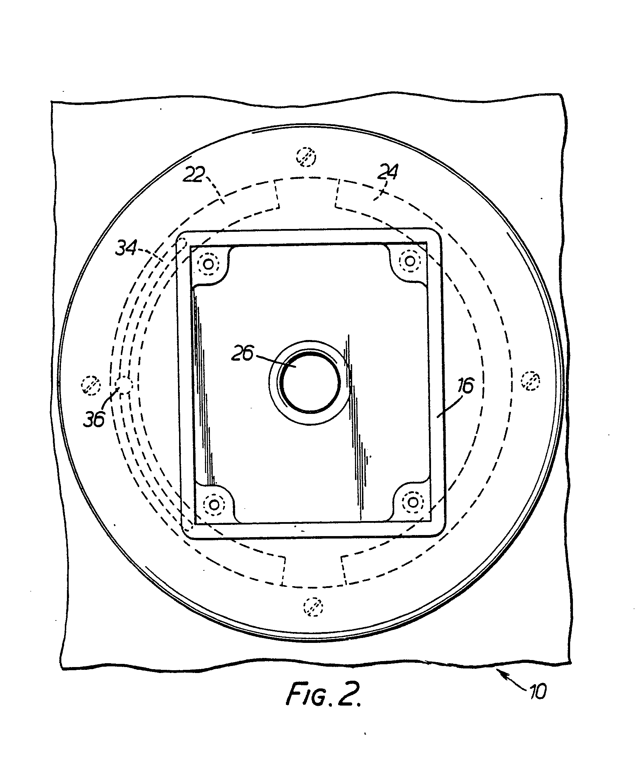

Figure 2 is a plan view of the turntable.

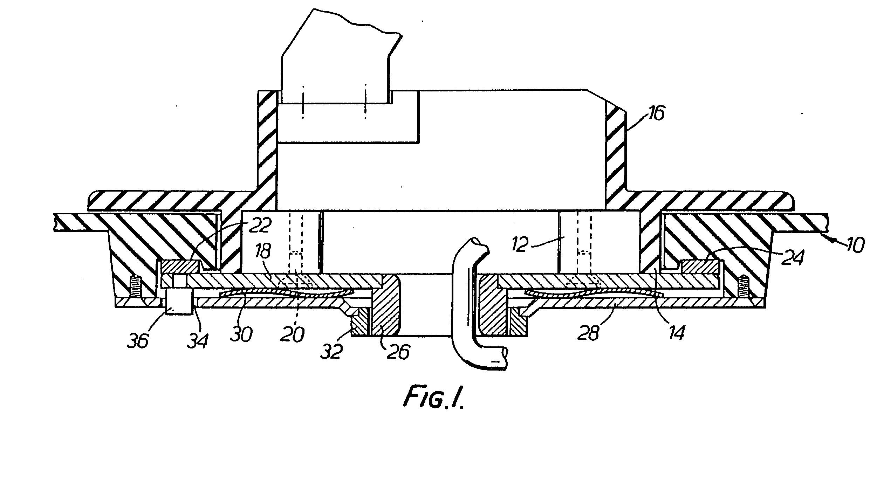

In Figure 1 is shown a base 10 which has a circular hole 12 formed therein for the reception of an annular flange 14 formed on a housing 16. Secured to the lower part of the flange 14 by screws 20 is a circular rotatable plate 18. The diameter of the plate 18 is greater than the diameter of the hole 12 and between the plate 18 and the overlapping annular portion of the base 10 are located two substantially semicircular bearing plates 22 and 24. The bearing plates are secured in a circular groove formed in the lower portion of the base 10.

In the centre of the plate 18 is secured a boss 26 and this projects through a hole formed through a clamp plate 28 to centralise the housing. The clamp plate is bolted underneath the base 10, and between the clamp plate 28 and the plate 18 is arranged a low friction waveform washer 30. The plate 18 is supported by the waveform washer 30 which also applies tension to urge the plate 18 upwards when viewed in Figure 1 so that the plate 18 contacts the bearing plates 22 and 24.

A boss 32 is brazed in the hole through the clamp plate 28 and serves as a bearing for the boss 26. An arcuate slot 34 is formed in the clamp plate 28, and this is engaged by a pin 36 to restrict the angular movement of the housing 16. In this example 120 degrees of movement is permitted.

The housing is intended to support a visual display unit, and a power supply cable for the unit is fed through a hole through the boss 26.

## Claims

1. A turntable assembly comprising a base member (10) and a load plate member (18) which is rotatable relative to said base member (10) and which is adapted to support a load (16), characterised in that a clamp plate member (28) is attached to said base member (10) and is adapted to retain said load plate member (18) relative to said base member, in that said load plate member (18) has a central boss member (26) which is adapted to project through a hole in said clamp plate member (28) to centralise said load plate member (18) relative to said base member (10) and in that a resilient low friction washer member (30) is located between said clamp plate member (28) and said load plate member (18) said washer member being adapted to urge said load plate member (18) and said base member (10) apart.

2. A turntable assembly according to claim 1 wherein the load plate member (18) is retained on the base member (10) by an annular portion of the base member (10) which overlaps the outer portion of the load plate member (18).

3. A turntable assembly according to claim 2 wherein bearing means (22, 24) are located between the outer portion of the load plate member (18) and the overlapping portion of the base member (10).

4. A turntable assembly as claimed in claim 3 wherein the bearing means comprises two substantially semicircular bearing plates (22, 24).

5. A turntable assembly as claimed in claim 3 or claim 4 wherein the bearing means (22, 24) is adapted to run in a channel formed in the overlapping portion of the base member (10).

## Patentansprüche

1. Eine Drehtischgruppe, bestehend aus einem Sockelteil (10) und einem Ladetellerteil (18), der im Verhältnis zum besagten Sockelteil (10) drehbar ist und zur Stützung einer Last (16) adaptiert ist, dadurch gekennzeichnet, daß ein Spannscheibenteil (28) an dem besagten Sockelteil (10) befestigt und dazu adaptiert ist, den besagten Ladetellerteil (18) im Verhältnis zum besagten Sockelteil zu halten, dadurch daß der Ladetellerteil (18) einen zentralen Nabenteil (26) hat, der so adaptiert ist, daß er durch ein Loch in dem besagten Spannscheibenteil (28) hindurch ragt, um den besagten Ladetellerteil (18) im Verhältnis zum besagten Sockelteil (10) zu zentralisieren, und dadurch, daß eine elastische Unterlegscheibe (30) zwischen dem besagten Spannscheibenteil (28) und dem besagten Ladetellerteil (18) vorgesehen ist, wobei die erwähnte Unterlegscheibe so adaptiert ist, daß sie den besagten Ladetellerteil (18) und den besagten Sockelteil (10) voneinander weg zwängt.

2. Eine Drehtischgruppe gemäß Anspruch 1, in welcher der Ladetellerteil (18) auf dem Sockelteil (10) durch einen ringförmigen Teil des Sockelteils (10), der den äußeren Teil des Ladetellerteils (18) überlappt, gehalten wird.

3. Eine Drehtischgruppe gemäß Anspruch 2, in welcher Lagerungseinrichtungen (22, 24) zwischen dem äußeren Teil des Ladetellerteils (18) und dem überlappenden Teil des Sockelteils (10) vorgesehen sind.

4. Eine Drehtischgruppe gemäß Anspruch 3, in welcher die Lagerungsvorrichtungen aus zwei, im

**0 087 282**

wesentlichen halbrunden Lagerscheiben (22, 24) bestehen.

5. Eine Drehtischgruppe gemäß Anspurch 3 oder 4, in welcher die Lagerungsvorrichtung (22, 24) so adaptiert ist, daß sie in einer Rinne läuft, die in dem überlappenden Teil des Sockelteils (10) gebildet wird.

## Revendications

1. Assemblage plateau-tournant component un élément de base (10) et un élément de plaque de charge (18) rotatif par rapport audit élement de base (10) et adapté pour supporter une charge (16), caractérisé en ce qu'un élément à plaque de blocage (28) est attaché audit élément de base (10) et adapté pour retenir ledit élément de plaque de charge (18) par rapport audit élément de base, en ce que ledit élément de plaque de charge (18) comporte un élément de bossage central (26) qui est adapté pour sortir en saillie depuis un trou dans ledit élément à plaque de blocage (28) pour centrer ledit élément de plaque de charge (18) par rapport audit élément de base (10) et en ce qu'un élément souple de rondelle basse friction (30) est situé entre ledit élément de plaque de charge (18) et ledit élément de plaque de charge ledit élément de rondelle étant adapté pour séparer ledit élément de plaque de charge (18) et ledit élément de base (10).

2. Assemblage plateau-tournant selon la 1ère revendication dans lequel l'élément de plaque de charge (18) est retenu sur l'élément de base (10) par une portion annulaire de l'élément de base (10) qui chevauche la portion extérieure de l'élément de plaque de charge (18).

3. Assemblage plateau-tournant selon la 2ème revendication dans lequel lesdits moyens de support (22, 24) sont situés entre la portion extérieure de l'élément de plaque de charge (18) et la portion en chevauchement de l'élément de base (10).

4. Assemblage de plateau-tournant selon la 3ème revendication dans lequel les moyens de support comportent deux plaques de support essentiellement semicirculaires (22, 24).

5. Assemblage de plateau-tournant selon la 3ème revendication ou la 4ème revendication dans lequel les moyens de support (22, 24) sont adaptés pour former une rainure pratiquée dans la portion chevauchante de l'élément de base (10).

FIG.I.

FIG. 2.